# EUROPEAN PATENT APPLICATION

(11) **EP 2 058 173 A1**
(43) Date of publication of application: **13.05.2009**
(21) Application number: 07120305.3
(22) Date of filing: 08.11.2007
(51) Int. Cl.: B60P 3/36, B60R 15/00

(54) **Protection system for recreational vehicles**

(71) Applicant: Archenti, Ercole, 26900 Lodi (IT)
(72) Inventor: Archenti, Ercole, 26900 Lodi (IT)
(74) Representative: Serravalle, Marco

(57) **Abstract**

The present invention concerns a protection system for recreational vehicles, which system prevents deterioration of the vehicle due to damages produced by water.

In one mode of realization, the invention comprises a method to protect recreational vehicles from damages deriving from water leakages or infiltrations, which method comprises installing water sensors in sensible places of the vehicle.

In another embodiment the invention is directed to a recreational vehicle comprising one or more water sensor(s).

## Description

The present invention concerns a protection system for recreational vehicles, which system prevents deterioration of the vehicle due to damages produced by water.

With the term recreational vehicles it is intended any type of vehicle use for recreational purposes such as camper, caravan, vehicles for transport of animals, and in general, any type of vehicle which includes waterworks comprising for example at least one of the following: a shower box, a sink, a water basin, a wc, and in general any apparatus for washing people, animals or dishes. These vehicles often suffer from heavy damage due to leakages and infiltrations from pipes and connections.

It is important to note that these vehicles are subjected to very hard conditions, due to the vibrations deriving from thousands of kilometres, to the extreme temperature conditions they are subjected to (from very hot and sunny conditions in summer to very cold and wet conditions in winter when used in the mountains). All these factors make it more likely that in time a pipe, a gasket or a joint may loosen or brake, giving rise to a water leakage or infiltration under the floor.

These leakages are often non visible and continue in time until the consequences become apparent and very often dramatic. The floor of most recreational vehicles is wooden and the humidity of the leakage or infiltration results in the collapse of the structure. Most of the times it is impossible to repair the structure and the vehicle can only be dismantled.

The present invention intends to prevent major damages to recreational vehicles by providing the vehicles with a system for the detection of water in those places where it is possible to have a leakage or infiltration in the structure.

In fact, most recreational vehicles are provided with a shower box or similar washing devices which form a unique block with other elements of the vehicle, e.g. the floor. If a leakage occurs in the discharge system, water directly flows under the floor without being detected.

The protection system of the present invention allows detection of water leakages or infiltrations in any point of the structure where it is considered important to detect the possible presence of water.

In a preferred embodiment, the invention comprises a recreational vehicle which comprises one or more water sensor(s).

Preferably, the sensors are placed in the most critical area of the vehicle, i.e. those area where it is more likely that there is a water leakage or infiltration, e.g. under the shower box, near to the water pump, under the water tank(s), next to the main joints.

The water sensor(s) can be any water sensor known in the art. For example, it can be a sensor based on measurement of conductivity. The sensors are preferably connected to a central unit which receives the signal from the sensor and can optionally perform different tasks.

When using sensors which penetrate into the wood, it is possible to detect high levels of humidity in the wood and prevent deterioration of wood even in the absence of free water.

For example, a very simple but efficient water sensor is obtained by simply positioning two electrodes connected with a source of DC power of 9-12 V. In standard conditions the two electrodes are isolated and no current circulates between them. If the two electrodes are immersed in water, the circuit is closed and there is circulation of current. The closure of the circuit activates the alarm(s).

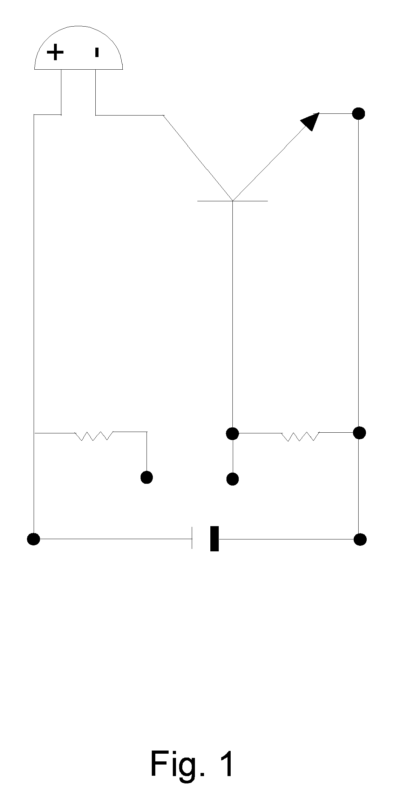

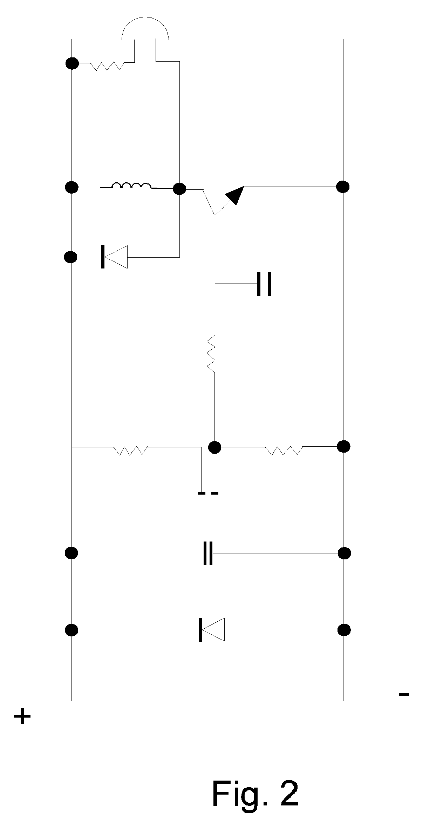

Fig. 1 represents a very simple but efficient representation of the basic scheme of the central unit for possible use in combination with the sensors of the invention. Fig. 2 represents a more detailed embodiment wherein the central unit presents some kind of electric protections for the components of the system.

It is however clear to the skilled person that it is possible to use different types of central unit, e.g. a computer or a microchip programmed to perform the operations described herein.

In one embodiment, the DC power supply for the water detection system is the power supply of the water pump. This makes it possible to reduce the costs of the system without prejudice for its performances. In this way, however, when the vehicle is not active, also the water sensors are not active. Thus, if it is desirable to have the water sensors always active, it is possible to connect the system to an independent DC power supply which can guaranty that the sensors remain always active, e.g. when the camper is parked in the open air for long periods, to detect possible infiltrations of water from the roof or from windows.

When a sensor indicates presence of water in a location of the vehicle, the central units preferably stops the water pump and, optionally activates one or more type(s) of alarm.

In a preferred embodiment the alarm is a acustic alarm, e.g. a buzzer, which informs the proprietor of the emergency.

However, it can be preferred to have also an alarm on distance, e.g. a signal sent either by cellular phone, e.g. via GSM or UMTS network, or through a satellite, to inform the proprietor when he is not in the neighbourhood.

In another embodiment of the invention, the central unit can be only in part dedicated to the protection system of the invention and use part of the available channels for other purposes, e.g. anti-theft alarm.

## Claims

1. Recreational vehicle comprising one or more water sensor(s).

2. Recreational vehicle according to claim 1 wherein the water sensors are placed in at least one of the following locations: under the shower box, near to the water pump, under the water tank(s), near to the main joints.

3. Recreational vehicle according to claims 1-2 wherein the water sensors are connected to a central unit.

4. Recreational vehicle according to claim 3 wherein the central unit further commands the water pump.

5. Recreational vehicle according to claims 3-4 wherein the central unit, when a sensors reports presence of water, activates an alarm.

6. Recreational vehicle according to claim 5 wherein the alarm is an acoustic alarm.

7. Recreational vehicle according to claim 6 wherein the alarm is also notified to the proprietor in wireless mode, preferably via GSM or UMTS network.

8. Recreational vehicle according to claims 1-7 wherein the vehicle is a camper, a caravan or a vehicle for transport of animals.

9. Method to protect recreational vehicles from damages deriving from water leakages or infiltrations, which method comprises installing water sensors in sensible places of the vehicle.

10. The method of claim 9 wherein the water sensors are connected to a central unit.
